# FASCICULE DE BREVET EUROPEEN

(11) **EP 0 441 719 B1**
(45) Date de publication et mention de la délivrance du brevet: **27.03.1996**
(21) Numéro de dépôt: 91420027.4
(22) Date de dépôt: 29.01.1991
(51) Int. Cl.: B32B 27/12, B32B 5/24, E04H 15/54

(54) **Bâche ou matériau similaire présentant une résistance à la déchirure améliorée**
Plane oder ähnliches Material mit verbesserter Reissfestigkeit
Tarpaulin or similar material having improved tear resistance

(30) Priorité: 06.02.1990 FR 9001585; 02.07.1990 FR 9008583
(43) Date de publication de la demande: 14.08.1991
(73) Titulaire: TISSUS TECHNIQUES DE TREVOUX, F-01600 Trevoux (FR)
(72) Inventeur: Prudhomme, Pierre, F-69380 Lozanne (FR)
(74) Mandataire: Laurent, Michel

(56) Documents cités:
- EP-A- 0 146 521
- DE-A- 1 941 838
- US-A- 4 142 017

## Description

Dans le domaine de la protection, notamment lors d'opérations de transport par voie ferroviaire, au moyen de camions, il a été proposé depuis fort longtemps d'utiliser des parois souples désignées par l'expression générique "bâche", et qui sont constituées de tissus résistants, étanches, montés sur un cadre support définissant le volume des produits à transporter. Par rapport aux solutions faisant appel à des parois rigides, en général en métal, outre le gain de poids, les bâches présentent comme avantage essentiel de faciliter les opérations de chargement et de déchargement. Les bâches tissées présentent cependant un inconvénient majeur, à savoir qu'elles n'offrent pas une résistance suffisante à la déchirure, notamment à la découpe sous l'action d'un objet tranchant et, par suite, une protection insuffisante contre les vols. Pour résoudre ce problème, il a été proposé de réaliser des tissus spéciaux (voir notamment brevet US 4 298 645). De tels tissus faisant appel à des fils spéciaux, sont d'un coût de production élevé et n'offrent pas une sécurité totale, étant donné que lorsque l'on a réussi à amorcer une déchirure en exerçant une action de découpe d'intensité déterminée, il est possible d'agrandir cette déchirure en exerçant la même force.

Dans d'autres secteurs techniques que celui des bâches, il est également connu depuis fort longtemps de réaliser des surfaces protectrices renforcées (voir notamment brevet britannique no. 1 098 381 - publication de la Revue Knitted Outervear Times - 25 Août 1968). Les applications les plus connues sont les complexes constitués de deux films ou tissus enduits, emprisonnant entre eux une grille de renfort, et qui sont notamment utilisés comme éléments protecteurs sur les marchés forains. De tels articles multicouches ne présentent cependant pas des caractéristiques mécaniques suffisantes autorisant leur utilisation comme bâche protectrice dans les transports (camion, voie ferrée,..).

On connai aussi, du document DE-A-1 941 838, un produit qui peut être assimilé à une bâche, ledit produit comprenant deux structures textiles tissées emprisonnant entre elles une armature de renforcement [p. ex., "Wirrfaservlies", 2, c.à.d. un tissu non tissé ou un voile de fibres désordonnées], la liaison des deux tissus externes entre eux étant obtenue au moyen d' une couche de mousse (polyuréthanne), cette couche reliant les deux surfaces des tissus externes par passage au travers des mailles de la structure de renforcement, en raison du fait que ladite structure de renforcement est incorporée au sein de la mousse. L' armature de renforcement peut également être constituée par un tissu tissé.

Or on a trouvé, et c'est ce qui fait l'objet de la présente invention, un nouveau type de bâche qui peut être produit de manière industrielle, en grande quantité, et de façon économique d'une manière similaire aux complexes multicouches (film/film, tissu/tissu..) comportant un renfort intermédiaire, qui permet de résoudre ces problèmes par le fait qu'il présente la caractéristique d'offrir une résistance qui croît progressivement lorsque l'on exerce un effort parallèlement à la surface, sous l'action d'un objet tranchant, jusqu'à s'opposer à tout déplacement dudit objet.

Une telle caractéristique est obtenue grâce à la structure particulière du complexe conforme à l'invention, complexe constitué de deux structures textiles tissées qui emprisonnent entre elles une armature de renforcement la liaison des deux tissus externes entre eux, étant obtenue au moyen d'une couche de matière présentant un module au cisaillement lui permettant de se rompre lorsque l'on exerce un effort sur l'armature de renforcement, cette couche de matière reliant les deux surfaces des tissus externes entre elles par passage au travers des mailles de l'armature de renforcement, et qui se caractérise en ce que :
- ladite armature de renforcement est constituée par un tricot à mailles cueillies, équilibré, déformable, à base de fils à hautes caractéristiques mécaniques, lesdits fils conservant une latitude de déplacement, sans rupture, lors de l'action d'une force exercée au travers du complexe dans un sens parallèle à sa surface, et ce de telle sorte que lors de cette action, les fils maillés se déplacent et s'appuient successivement les uns contre les autres jusqu'à offrir une résistance s'opposant à toute progression de ladite force.

Comme matériau de liaison entre les deux couches tissées constituant la bâche conforme à l'invention, on utilisera, par exemple, une couche de mousse de polyuréthane (ayant par exemple une densité de 30 kilos au mètre cube), un film de polyuréthane thermofusible (ayant par exemple une épaisseur de cinquante microns), ou tout autre matériau permettant une liaison des deux couches tissées enduites, en passant au travers de la structure maillée de renforcement et ce, de telle sorte que les fils de cette structure maillée conservent une latitude de déplacement.

Il convient de noter que la structure maillée utilisée dans le matériau conforme à l'invention est réalisée sur un métier à tricoter à mailles cueillies.

Par ailleurs, si la liaison entre les différentes couches peut être réalisée sans solution de continuité, selon une variante perfectionnée, cette liaison peut être réalisée en ayant une alternance de zones liées et de zones non liées dans lesquelles l'armature de renforcement est disposée librement entre les deux structures textiles externes.

Une telle liaison par "place" peut être réalisée de différentes manières, par exemple en réalisant une alternance de bandes de zones liées et de zones non liées, soit, de préférence, en réalisant des motifs (surfaces circulaires, carrés) non jointifs, séparés les uns des autres par des zones non liées.

Conformément à une telle variante, la proportion de zones liées par rapport aux zones non liées sera avantageusement équivalente (50/50).

Lorsque les zones liées et les zones non liées se présentent sous la forme de bandes parallèles espacées les unes des autres (par exemple bandes disposées dans le sens travers du tissu), la résistance à la déchirure sera fortement augmentée lorsque l'on exercera une action dans une direction orthogonale auxdites bandes ; en revanche, si l'action de découpe est exercée dans le sens travers (parallèlement à la bande), la résistance sera équivalente à un matériau dans lequel les différentes couches sont liées sans solution de continuité.

La bâche conforme à l'invention présente non seulement la caractéristique d'offrir une très bonne résistance à la déchirure, mais par ailleurs, a également des caractéristiques additionnelles inhérentes tant aux caractéristiques propres de la couche intermédiaire de liaison qu'à celles de la structure du renfort maillé, à savoir :
- que la couche de liaison intermédiaire peut jouer le rôle d'un isolant,
- que le renfort maillé métallique peut servir d'élément conducteur permettant de déclencher une alarme, de réaliser un chauffage, de réaliser un camouflage radar aux objets transportés masqués par une telle bâche.

L'invention et les avantages qu'elle apporte seront cependant mieux compris grâce aux exemples de réalisation donnés ci-après, à titre indicatif mais non limitatif, et qui sont illustrés par les figures annexées dans lesquelles :
- la figure 1 est une vue schématique en perspective éclatée, montrant la structure générale d'une bâche conforme à l'invention ;
- les figures 2a et 2b illustrent schématiquement les déplacements de la structure maillée à l'intérieur d'une telle bâche, lorsqu'on exerce une action de découpe au travers de cette bâche en exerçant une force parallèle à sa surface.

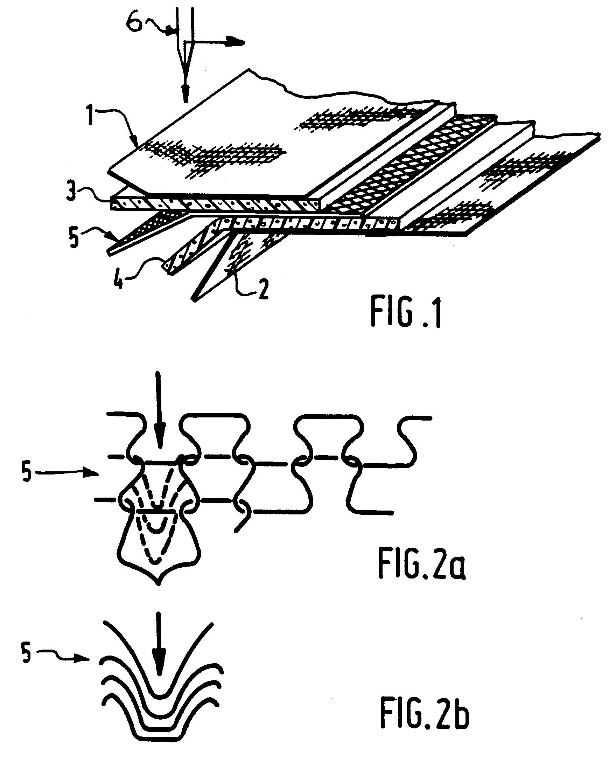

Si l'on se reporte aux schémas annexés, d'une manière générale, la bâche conforme à l'invention est constituée par un complexe comprenant deux structures textiles tissées (1,2) qui emprisonnent entre elles une armature de renforcement (5). Cette armature de renforcement (5) est constituée par une structure maillée, déformable, telle que représentée à la figure 2a, et qui est à base de fils à hautes caractéristiques mécaniques, telles que par exemple des fils en acier inoxydable. La liaison des deux tissus externes (1,2) entre eux est obtenue au moyen d'une couche intermédiaire (3,4) qui présente un module au cisaillement tel que l'armature de renforcement (5), sous l'effort, puisse rompre cette couche de liaison. L'assemblage est réalisé par tous moyens appropriés, tel que par un traitement thermique et ce, de telle sorte que la couche interne de liaison passe au travers des mailles de la structure interne de renforcement qui se trouve donc placée en position médiane à l'intérieur du complexe. Les fils de la structure de renforcement conservent une latitude de déplacement, sans rupture, lors de l'action d'une force exercée au travers du complexe dans un sens parallèle à cette surface, par exemple au moyen d'un objet tranchant (6). Lors de l'action de cet objet tranchant (6), et ainsi que cela ressort des figures 2a,2b, les fils maillés se déplacent et s'appuient successivement les uns contre les autres jusqu'à offrir une résistance s'opposant à toute progression de ladite force.

### Exemple 1 :

On réalise une bâche conforme à l'invention telle qu'illustrée à la figure 1, à partir de deux tissus enduits, en fils polyester, ayant une contexture de huit fils/centimètre en chaine et de huit fils/centimètre en trame, chaque fil polyester ayant un titre de 1100 dtex.

Chaque tissu enduit pèse 700 grammes/mètre carré et, pris seul, peut être découpé en exerçant une action avec une force de un à deux décaNewton exercée dans le sens parallèle de la surface, fonction de l'objet tranchant que l'on utilise.

Préalablement à la réalisation du complexe conforme à l'invention, chaque tissu (1,2) est revêtu sur l'une de ses faces d'une couche (3,4) de mousse de polyurétanne ayant une densité de 30 kilos par mètre cube et ce, selon une technique conventionnelle, chaque couche de mousse ayant une épaisseur d'environ un millimètre. Entre les deux tissus enduits ainsi de mousse, on dispose alors une structure maillée (5) constituée de fils métalliques (acier inoxydable ayant un diamètre de 0,3 mm), obtenue sur un métier à tricoter à mailles cueillies, armure jersey, et ce, de façon à obtenir un treillis dans lequel chaque rangée de mailles a une hauteur d'environ 0,5 millimètre, la densité en mailles étant d'environ de deux colonnes de mailles par centimètre.

La liaison des deux tissus (1,2) enduits de mousse (3,4) de part et d'autre de cette structure maillée de renfort (5), est réalisée de manière uniforme sans solution de continuité et est obtenue par fusion superficielle à la flamme en prenant soin de bien maintenir le renfort maillé dans la zone médiane comprise entre les deux couches externes. L'article fini a une épaisseur totale de 2,5 millimètres, et pèse environ deux kilos au mètre carré. Cet article est souple et peut être utilisé en tant que bâche repliable.

Des essais de découpe réalisés en utilisant un "cutter", montrent qu'un tel complexe, même si l'on peut amorcer une découpe sur une longueur de l'ordre de quelques centimètres, résiste jusqu'à une force comprise entre 35 et 40 décaNewton. Un tel résultat peut s'expliquer par le fait que dans la structure particulière de la bâche, la structure métallique de renfort emprisonnée dans la partie médiane peut se déformer comme schématisé aux figures 2a et 2b, les mailles venant s'appuyer les unes contre les autres au fur et à mesure du déplacement de l'objet tranchant, et offrant donc une résistance qui augmente progressivement jusqu'à s'opposer totalement à l'avance dudit objet tranchant.

A titre comparatif, on réalise un complexe armé sans mousse en utilisant les mêmes matériaux que précédemment, c'est-à-dire que l'on utilise un complexe du type connu antérieurement par contrecollage tissu contre tissu, avec interposition d'un renfort intermédiaire. Un tel complexe collé peut être découpé en exerçant une action avec une force de 7 à 9 décaNewton.

L'exemple comparatif qui précède montre bien les avantages apportés par le matériau conforme à l'invention, et notamment la grande résistance à la déchirure qu'il présente. Par ailleurs, il convient également de noter qu'un tel matériau conserve une bonne souplesse permettant de plier et déplier facilement la bâche.

### Exemple 2 :

On réalise une bâche conforme à l'invention d'une manière similaire à l'exemple 1 en utilisant des tissus (1,2) identiques à cet exemple 1, et en remplaçant les couches de mousse (3,4) par des films de polyuréthanne ayant une épaisseur de trente µm et une température de fusion de 110°C. La structure maillée (5) intercalée dans la partie centrale, est également constituée par un tissu à mailles cueillies, armure jersey, également réalisées dans des fils d'acier inoxydable ayant un diamètre de 0,3 millimètre. La structure maillée est décontexturée par rapport à l'exemple 1, de telle sorte que les colonnes de mailles successives soient reliées par des flottés de plus grande longueur. Dans cet exemple de réalisation, les mailles ont une hauteur d'environ 0,4 millimètre et les brides s'étendant entre deux colonnes consécutives, une longueur d'environ deux centimètres.

L'assemblage des différents constituants est obtenu par calandrage à chaud, de telle sorte que les films de polyuréthanne se solidarisent entre eux en passant au travers des mailles de la structure de renforcement (5).

Le complexe formé a une épaisseur de 1,8 millimètre et présente une résistance à la découpe de vingt décaNewtons, donc également nettement supérieur à un complexe tissu/tissu sans renfort interne.

### Exemple 3 :

On réalise une bâche conforme à l'invention à partir des mêmes matériaux que dans l'exemple 2, mais la liaison des différentes couches entre elles est réalisée de telle sorte que l'on réalise des bandes transversales liées de huit centimètres de large, séparées entre elles par des zones non liées également de huit centimètres de large. Par rapport à l'exemple 2, il a été constaté que lorsqu'on exerçait une action de découpe au moyen d'un "cutter" dans le sens long (orthogonalement aux bandes), que l'on obtenait tout d'abord une résistance à la déchirure dans les zones collées de l'ordre de 20 décaNewton (résistance équivalente au matériau réalisé conformément à l'exemple 2) et que, brutalement, cette résistance augmentait lorsque l'on atteignait les zones non liées, pour atteindre une valeur pouvant aller jusqu'à 50, voire même 70 décaNewton.

En revanche, avec un tel matériau, la résistance dans le sens travers plafonne à un niveau de l'ordre de 20 décaNewton dans les zones liées entre elles d'une manière similaire au produit de l'exemple 2.

### Exemple 4 :

On réalise également un complexe ayant les mêmes composants que dans l'exemple 2 mais, au lieu d'effectuer la liaison des couches sous la forme de bandes régulières, on réalise cette liaison sous la forme de motifs, par exemple sous la forme de surfaces carrées (de huit centimètres par huit centimètres de côté), espacées les unes des autres d'une distance de trois centimètres, et disposées en quinconce sur la surface de l'article, les différentes zones collées ne se touchant pas entre elles. Avec un tel article, dont les éléments constitutifs sont également les mêmes que ceux décrits dans l'exemple 2, on constate que la résistance à la déchirure sous l'action d'un objet tranchant est pratiquement identique dans toutes les directions (sens long, sens travers, sens biais) et atteint également des valeurs de l'ordre de 50 décaNewton (au lieu de 20 décaNewton dans le cas où la liaison entre les différentes couches est réalisée sans solution de continuité).

Bien entendu, il pourrait être envisagé d'autres types de complexes conformes à l'invention, dont les différentes couches sont liées par place. Ainsi, au lieu d'effectuer la liaison entre les différentes couches sous la forme de motifs carrés, espacés les uns des autres, il pourrait être envisagé de réaliser de tels motifs sous d'autres formes, par exemple sous la forme de zones concentriques circulaires, la liaison étant réalisée dans les parties centrales et éventuellement entre deux couronnes non liées.

Dans tous les cas, il a été constaté que l'on obtenait de très bons résultats en ayant une proportion de zones liées et de zones non liées équivalentes.

La liaison par zones peut être obtenue par tout moyen approprié, par exemple par soudure selon des motifs prédéterminés.

## Revendications

1. Structure multicouches souple résistante à la découpe sous l'action d'un objet tranchant, comprenant deux tissus (1,2) emprisonnant entre eux une armature de renforcement (5), la liaison des deux tissus externes (1,2) entre eux, étant obtenue au moyen d'une couche de matière présentant un module au cisaillement lui permettant de se rompre lorsque l'on exerce un effort sur l'armature de renforcement, cette couche de matière reliant les deux surfaces des tissus externes (1,2) entre elles par passage au travers des mailles de l'armature de renforcement, caractérisée en ce que :
- ladite armature (5) de renforcement est constituée par un tricot à mailles cueillies équilibré, déformable, à base de fils à hautes caractéristiques mécaniques, lesdits fils conservant une latitude de déplacement, sans rupture, lors de l'action d'une force exercée au travers du complexe dans un sens parallèle à sa surface, et ce de telle sorte que lors de cette action, les fils maillés se déplacent et s'appuient successivement les uns contre les autres jusqu'à offrir une résistance s'opposant à toute progression de ladite force.

2. Structure souple selon la revendication 1, caractérisée en ce que la liaison des deux tissus externes (1) et (2) entre eux est réalisée sans solution de continuité.

3. Structure souple selon la revendication 1, caractérisée en ce que la liaison des deux tissus externes (1,2) entre eux est effectuée par "place", les zones liées étant séparées les unes des autres par des zones non liées dans lesquelles l'armature de renforcement (5) est libre entre les deux couches externes.

4. Structure souple selon la revendication 3, caractérisée en ce que les zones liées se présentent sous la forme de bandes continues, séparées les unes des autres par des bandes dans lesquelles les tissus externes (1,2) ne sont pas liés.

5. Structure souple selon la revendication 3, caractérisée en ce que les zones liées et les zones non liées se présentent sous la forme de motifs (surfaces circulaires, carrés) non jointifs.

6. Structure souple selon l'une des revendications 1 à 5, caractérisée en ce que le tricot maillé de renforcement est à base de fils métalliques.

7. Structure souple selon l'une des revendications 1 à 6, caractérisée en ce que les deux couches tissées (1,2) sont constituées de tissus enduits.

8. Structure souple selon la revendication 7, caractérisée en ce que la liaison entre les deux couches tissées (1,2) est obtenue au moyen d'une couche de mousse.

9. Structure souple selon la revendication 7, caractérisée en ce que la couche de liaison entre les deux tissus (1,2) est constituée par un film de polyuréthanne thermocollant.

10. Structure souple selon l'une des revendications 1 à 9, caractérisée en ce que le tricot de renforcement est constitué par un tricot à mailles cueillies décontexturé, de telle sorte que les flottés de grande longueur relient deux colonnes de mailles consécutives.

## Claims

1. Multilayers flexible structure resisting to the cutting under the action of a sharp object, comprising two woven (1,2) retaining a reinforcing strengthener (5) between them, the connection between the two outer fabrics (1,2) being obtained by means of a layer of material having a modulus of elasticity in shear allowing it to break when a force is exerted on the reinforcing strengthener, this layer of material connecting the two surfaces of the outer fabrics (1,2) to one another by passing through the loops of the reinforcing structure, characterized in that said reinforcing strengthener (5) consists of a balanced and deformable weft knitted structure based on threads with high mechanical characteristics, said threads of which retain a freedom of movement, without breaking, under the action of a force exerted through the complex in a direction parallel to its surface, this being in such a way that, during this action, the looped threads are displaced and bear successively against one another until they offer a resistance opposing any progression of said force.

2. Flexible structure as claimed in claim 1, characterized in that the connection between the two outer fabrics (1) and (2) is made without an interruption in continuity.

3. Flexible structure as claimed in claim 1, characterized in that the connection between the two outer fabrics (1,2) is made "in places", the connected zones being separated from one another by unconnected zones in which the reinforcing strengthener (5) is free between the two outer layers.

4. Flexible structure as claimed in claim 3, characterized in that the connected zones take the form of continuous strips separated from one another by strips in which the outer fabrics (1,2) are not connected.

5. Flexible structure as claimed in claim 3, characterized in that the connected zones and unconnected zones take the form of non-continuous figures (circular or square surfaces).

6. Flexible structure as claimed in one of claims 1 to 5, characterized in that the looped reinforcing structure is based on metal wires.

7. Flexible structure as claimed in one of claims 1 to 6, characterized in that the two woven layers (1,2) consist of coated fabrics.

8. Flexible structure as claimed in claim 7, characterized in that the connection between the two woven layers (1,2) is obtained by means of a layer of foam.

9. Flexible structure as claimed in claim 7, characterized in that the connecting layer between the two fabrics (1,2) consists of a heat-bonding polyurethane film.

10. Flexible structure as claimed in one of claims 1 to 9, characterized in that the reinforcing strengthener consists of a loosened flat knit, so that loose pieces of long length connect two successive columns of loops.

## Patentansprüche

1. Mehrlagiges, elastisches, gegen das Zertrennen unter Einwirkung eines scharfen Gegenstands beständiges Gefüge, welches zwei Gewebe (1, 2) umfaßt, die zwischen sich eine verstärkende Bewehrung (5) einschließen, wobei die Verbindung der beiden äußeren Gewebe (1, 2) miteinander mittels einer Materialschicht erreicht wird, welche ein Schermodul aufweist, das ihr Zerreißen ermöglicht, wenn eine Belastung auf die verstärkende Bewehrung einwirkt, und wobei diese Materialschicht die beiden Oberflächen der äußeren Gewebe (1, 2) miteinander verbindet, indem sie die Maschen der verstärkenden Bewehrung durchdringt, **dadurch gekennzeichnet**, daß:
- die genannte verstärkende Bewehrung (5) aus einer ausgeglichenen, verformbaren Kulierware, bestehend aus Fäden mit hohen mechanischen Eigenschaften, gebildet ist, wobei die genannten Fäden einen Verlagerungsspielraum ohne Zerreißen bewahren, Wenn eine durch die Gesamtanordnung hindurch in einer zu deren Oberfläche parallelen Richtung ausgeübte Kraft auf sie einwirkt, und zwar derart, daß bei dieser Einwirkung die vermaschten Fäden sich verlagern und sich sukzessive aufeinander stützen, bis sie eine Festigkeit aufweisen, die sich jedem Fortschreiten der genannten Kraft entgegenstellt.

2. Elastisches Gefüge nach Anspruch 1, **dadurch gekennzeichnet**, daß die Verbindung der beiden äußeren Gewebe (1) und (2) miteinander kontinuierlich ohne Unterbrechung ausgeführt ist.

3. Elastisches Gefüge nach Anspruch 1, **dadurch gekennzeichnet**, daß die Verbindung der beiden äußeren Gewebe (1, 2) miteinander "stellenweise" erfolgt, wobei die verbundenen Bereiche voneinander durch nicht verbundene Bereiche getrennt sind, in welchen die verstärkende Bewehrung (5) zwischen den beiden äußeren Lagen frei ist.

4. Elastisches Gefüge nach Anspruch 3, **dadurch gekennzeichnet**, daß die verbundenen Bereiche als durchgehende Streifen ausgebildet sind, die voneinander durch Streifen getrennt sind, in welchen die äußeren Gewebe (1, 2) nicht verbunden sind.

5. Elastisches Gefüge nach Anspruch 3, **dadurch gekennzeichnet**, daß die verbundenen Bereiche und die nicht verbundenen Bereiche als nicht aneinandergrenzende Muster (kreisförmige Flächen, Quadrate) ausgebildet sind.

6. Elastisches Gefüge nach einen der Ansprüche 1 bis 5, **dadurch gekennzeichnet**, daß die verstärkende Masehenware aus Metalldrähten besteht.

7. Elastisches Gefüge nach einem der Ansprüche 1 bis 6, **dadurch gekennzeichnet**, daß die beiden gewebten Lagen (1, 2) aus beschichteten Geweben gebildet sind.

8. Elastisches Gefüge nach Anspruch 7, **dadurch gekennzeichnet**, daß die Verbindung zwischen den beiden gewebten Lagen (1, 2) mittels einer Schaumlage erhalten wird.

9. Elastisches Gefüge nach Anspruch 7, **dadurch gekennzeichnet**, daß die Verbindungslage zwischen den beiden Geweben (1, 2) aus einem schmeizfixierenden Polyurethanfilm gebildet ist.

10. Elastisches Gefüge nach einem der Ansprüche 1 bis 9, **dadurch gekennzeichnet**, daß das verstärkende Gewebe aus einer enttexturierten Kulierware gebildet ist, derart, daß die Flottierungen großer Länge zwei aufeinanderfolgende Masehenkolonnen verbinden.
